# EUROPEAN PATENT APPLICATION

(11) **EP 4 679 658 A1**
(43) Date of publication of application: **14.01.2026**
(21) Application number: 23926114.2
(22) Date of filing: 26.12.2023
(51) Int. Cl.: H02J 3/28, F01K 3/00, F01K 7/02, H02J 15/00, F25J 1/02, F25J 5/00, F01K 25/10, F25J 1/00, F01K 3/18

(54) **LIQUID AIR ENERGY STORAGE SYSTEM BASED ON LNG COLD ENERGY UTILIZATION**

(30) Priority: 06.03.2023 CN 202310205428
(71) Applicant: Cnooc Gas & Power Group, Beijing 100028 (CN)
(72) Inventor: ZHANG, Chao, Beijing 100028 (CN); XIAO, Li, Beijing 100028 (CN); FAN, Jiakun, Beijing 100028 (CN); XU, Jiawei, Beijing 100028 (CN); LI, Fangqiu, Beijing 100028 (CN); YANG, Fan, Beijing 100028 (CN); CHENG, Hao, Beijing 100028 (CN); YANG, Liang, Beijing 100028 (CN); GAI, Xiaogang, Beijing 100028 (CN); QIU, Zaoyang, Beijing 100028 (CN); HAO, Sijia, Beijing 100028 (CN); CHEN, Ju, Beijing 100028 (CN); CHEN, Ruiying, Beijing 100028 (CN); PENG, Yanjian, Beijing 100028 (CN); AN, Dongyu, Beijing 100028 (CN); LI, Xinxin, Beijing 100028 (CN); LI, Xin, Beijing 100028 (CN)
(74) Representative: Petraz, Gilberto Luigi
(86) International application number: PCT/CN2023/141756
(87) International publication number: WO 2024/183420

(57) **Abstract**

The present invention relates to a liquid air energy storage system based on LNG cold energy utilization, which comprises an LNG receiving station, a compression section, an energy storage section, a cold storage section and an energy release section, the compression section comprises a compressor group and a first main heat exchanger, the LNG receiving station, the first main heat exchanger and the compressor group are connected in sequence, the energy storage section comprises a second main heat exchanger, a hydraulic turbine, an air separator and a liquid air storage tank connected in sequence, the second main heat exchanger is also connected with the compressor group, the energy release section comprises a liquid air pump, a third main heat exchanger and an expansion compressor group connected in sequence, the liquid air pump is also connected with the liquid air storage tank, the cool storage section comprises a cool storage tank and a circulation system, and the cool storage tank is connected with the second main heat exchanger and the third main heat exchanger through the circulation system. The present invention significantly improves the efficiency of the liquid air energy storage system by utilizing the LNG cold energy of the LNG receiving station and improves the utilization rate of the LNG cold energy.

## Description

### TECHNICAL FIELD

The present invention relates to the field of liquid air energy storage technology, specifically, relates to a liquid air energy storage system based on LNG cold energy utilization.

### BACKGROUND

LNG is a low-temperature (-162°C) liquid mixture that is obtained by deacidifying and dehydrating low-pollution natural gas and then freezing and liquefying the same through a low-temperature process. At LNG receiving stations, LNG needs to be gasified by a gasifier before use. It is estimated that the gasification process of each ton of LNG is equivalent to releasing 860MJ of cold energy (about 230kWh). By recycling this large amount of cold energy, a single receiving station can create hundreds of millions of yuan in profit each year.

Large-scale energy storage technology is an important means to improve the peak-shaving capacity of the power grid. Deep-cold liquefied air energy storage uses cheap off-peak electricity to absorb air in the environment, then cools it until it becomes liquid, and then stores it in a storage tank with a low temperature of -196°C. During peak electricity demand, liquid air is released from the tank and the pressure and temperature are increased to drive the steam turbine to generate electricity, thereby achieving utilization of off-peak electricity for peak demand. Because the boiling point of liquid air is relatively low, the heat supplied to the low-temperature air in the heat exchanger during power recovery can come from waste heat in the liquefaction process or heat from the external environment (such as seawater).

Therefore, there is an urgent need for a liquid air energy storage system based on LNG cold energy to achieve deep consumption and grid connection of new energy such as wind and light, reasonably absorb off-peak electricity of the power grid and utilization of different forms of residual heat resources, and stably output various forms of energy such as cold, heat, electricity and industrial gas when needed.

### SUMMARY

The purpose of the present invention is to provide a liquid air energy storage system based on LNG cold energy utilization, which can effectively improve the coordination and interaction of source, grid, load and storage, enhance the flexible adjustability and safety and reliability of the power system, and ensure the efficient utilization of new energy.

In order to achieve the above purpose, the present invention employs the following technical solutions:

A liquid air energy storage system based on LNG cold energy utilization, the system is connected with an LNG receiving station, and comprises a compression section, an energy storage section, a cold storage section and an energy release section;

The compression section comprises a compressor group, a first main heat exchanger and an interstage heat exchanger group, the LNG receiving station is connected with the interstage heat exchanger group through the first main heat exchanger, the compressor group is connected with the first main heat exchanger, the LNG cold energy of the LNG receiving station can participate in the air cooling of the first main heat exchanger, the LNG cold energy is utilized to directly participate in the air liquefaction, and liquefaction rate of air is improved;

The compressor group comprises a plurality of compressors connected in series, the interstage heat exchanger group comprises a plurality of interstage heat exchangers, the interstage heat exchangers are provided at the air inlets of the compressors to realize interstage cooling of the compressor group, and the LNG cold energy of the LNG receiving station can participate in the interstage cooling of the compressor group, so as to realize the reduction of the inlet temperature of the compressor group while reducing the power of the compressors and the system efficiency is improved;

The energy storage section comprises a second main heat exchanger, a hydraulic turbine, an air separator and a liquid air storage tank connected in sequence, and the second main heat exchanger is connected with the compressor group through the first main heat exchanger, the gas phase outlet of the air separator is connected with the compressor group through the second main heat exchanger, the first main heat exchanger, and the interstage heat exchanger group in sequence;

The energy release section comprises a liquid air pump, a third main heat exchanger and an expansion compressor group connected in sequence, the liquid air pump is also connected with the liquid air storage tank, and a heat source of the energy release section is seawater provided by the LNG receiving station or hot water provided by a gas power plant supporting the LNG receiving station;

The cold storage section comprises a cold storage tank and a circulation system, the cold storage tank is connected with the second main heat exchanger and the third main heat exchanger through the circulation system, the cold storage section stores the cold capacity of the liquid air of the energy release section by means of a cold storage medium, and releases the cold capacity in the energy storage section so as to increase the liquefaction rate of air, and to reduce the energy consumption of the energy storage stage;

The liquid air energy storage system based on LNG cold energy utilization, preferably, the compressor group comprises a first compressor, a second compressor, a third compressor, a fourth compressor, and a fifth compressor connected in sequence, the first compressor, the second compressor, the third compressor, the fourth compressor, and the fifth compressor achieve interstage cooling, release low-grade cold capacity, and improve utilization rate of LNG cold energy, and the fifth compressor is connected with the first main heat exchanger and the first main heat exchanger is connected with the third compressor.

The liquid air energy storage system based on LNG cold energy utilization, preferably, the compression section further comprises an adsorption device, the adsorption device is provided between the second compressor and the third compressor, and is provided at an air outlet end of the expansion compressor group, the adsorption device is used to remove carbon dioxide and water, and the adsorption device can regenerate by means of the air discharged from the expansion compressor group.

The liquid air energy storage system based on LNG cold energy utilization, preferably, the interstage heat exchanger group comprises a first interstage heat exchanger, a second interstage heat exchanger and a third interstage heat exchanger, the first interstage heat exchanger is provided at an air inlet of the fifth compressor, the second interstage heat exchanger is provided at an air inlet of the fourth compressor, the third interstage heat exchanger is provided at an air inlet of the third compressor, the LNG receiving station is respectively connected with the first main heat exchanger, the first interstage heat exchanger, the second interstage heat exchanger and the third interstage heat exchanger, the first interstage heat exchanger, the second interstage heat exchanger and the third interstage heat exchanger are sequentially connected therebetween, the third interstage heat exchanger is also connected with a gas phase outlet of the air separator through the first main heat exchanger and the second main heat exchanger.

The liquid air energy storage system based on LNG cold energy utilization, preferably, the energy release section further comprises an interstage heater group, which comprises a plurality of interstage heaters, the expansion compressor group comprises a plurality of expansion compressors in series, and the interstage heaters are provided at air inlet ends of the expansion compressors to achieve interstage heating for the heat source.

The liquid air energy storage system based on LNG cold energy utilization, preferably, the expansion compressor group comprises a first expander, a second expander, a third expander and a fourth expander connected in sequence, the interstage heater group comprises a first interstage heater, a second interstage heater, a third interstage heater and a fourth interstage heater, the first expander is also connected with the third main heat exchanger, the air inlet end of the first expander group is provided with the first interstage heater, the air inlet end of the second expander is provided with the second interstage heater, the air inlet end of the third expander is provided with the third interstage heater, and the air inlet end of the fourth expander is provided with the fourth interstage heater, so as to achieve the interstage heating for the heat source.

The liquid air energy storage system based on LNG cold energy utilization, preferably, the cold storage tank comprises a first cold storage tank and a second cold storage tank, the circulation system comprises a first circulation pipeline and a second circulation pipeline, the second main heat exchanger, the first cold storage tank and the third main heat exchanger are connected via the first circulation pipeline, the second main heat exchanger, the second cold storage tank and the third main heat exchanger are connected via the second circulation pipeline, the first cold storage tank and the second cold storage tank are respectively provided with a cold storage packed bed, the cold storage packed beds can use solid-phase cold storage medium or phase-change cold storage material, and the two cold storage packed beds are started, operated and stopped at the same time so as to achieve the continuous circulation between the energy storage section and the energy release section, which is capable of guaranteeing a low temperature state of the first main heat exchanger, the second main heat exchanger and the third main heat exchanger so as to prevent the structural damage due to temperature stress caused by the temperature rebound of the first main heat exchanger, the second main heat exchanger and the third main heat exchanger.

The liquid air energy storage system based on LNG cold energy utilization, preferably, the cold storage medium of the cold storage section is a propane cold storage medium or a nitrogen cold storage medium, which can satisfy the work of an LNG receiving station with an intermediate medium gasifier or an LNG receiving station without the intermediate medium gasifier.

The liquid air energy storage system based on LNG cold energy utilization, preferably, the first main heat exchanger, the second main heat exchanger and the third main heat exchanger are plate-fin heat exchangers or coiled pipe heat exchangers.

The liquid air energy storage system based on LNG cold energy utilization, preferably, the hydraulic turbine is a low-temperature hydraulic turbine or a J-T throttle valve.

Because the inventive employs the above technical solutions, it has the following advantages:
1. The liquid air energy storage system based on LNG cold energy utilization can employ an open cycle or a closed cycle as a whole. In the large energy density energy storage scenario, the closed cycle can be adopted. The air directly enters the inlet of the compression section after releasing energy in the energy release section, which can reduce the energy consumption of the air compressor for purification and improve the system efficiency. In the high-power intermittent operation energy storage scenario, the open cycle can be adopted. The air is directly discharged into the atmosphere after releasing energy in the energy release section, which can reduce the number of energy storage facilities, such as liquid air energy storage, and reduce system cost.
2. In the liquid air energy storage system based on LNG cold energy utilization, since the air is to be liquefied and the liquid temperature is relatively low, it is necessary to remove carbon dioxide and water therein to prevent solid dielectric from being mixed in the liquefaction process and damaging the devices and equipment in the system. The compression section is provided with an adsorption device to remove carbon dioxide and water, and the adsorption device can be regenerated by the air discharged in the expansion section.
3. There are two ways to utilize LNG cold energy. Firstly, it directly participates in the interstage-cooling of the compressor group, reduces the inlet temperature of the compressor and reduces the compressor power at the same time, thereby improving the system efficiency. Secondly, it directly participates in the air cooling of the first main heat exchanger, and the LNG cold energy is utilized to directly participate in the air liquefaction, thereby improving the liquefaction rate of air. The low-temperature LNG preferentially participates in the air cooling of the main heat exchanger, and then participates in the interstage cooling of the compressor group. The high-grade LNG cold energy is first used, and then the low-grade LNG cold energy is used, which complies with the principle of LNG gradient utilization, and at the same time, the cold energy contained in LNG is fully utilized, thereby improving the utilization rate of LNG and the exergy efficiency of the overall system.
4. The liquid air energy storage system has cold storage function, the cold capacity of liquid air is stored by the cold storage medium in the energy release stage, and the cold capacity is released in the energy storage stage, thereby increasing the liquefaction rate of air and reducing the energy consumption in the energy storage stage. The cold storage section can employ propane cold storage medium or nitrogen cold storage medium for cold storage cycle. LNG receiving stations with intermediate medium vaporizers can use their own propane system for cold storage. If the LNG receiving station itself does not contain a propane system, nitrogen can be used for cold storage cycle.
5. The cold storage section employs high and low temperature dual circulation to cool simultaneously, and the temperature levels of the circulation are distinguished by changing the nitrogen circulation volume. Taking the nitrogen cold storage cycle as an example, a small flow of nitrogen circulates at a low temperature level, and the temperature drops to about -180°C after heat exchange with liquid air, and then the cold capacity is transferred to the air before liquefaction and the temperature rises to about -170°C. A large flow of nitrogen circulates at a high temperature level, and the temperature drops to about -180°C after heat exchange with liquid air, and then the cold capacity is transferred to the air before liquefaction and the temperature rises to about -154°C.
6. Simultaneous circulation of nitrogen at the high and low temperature levels fully utilizes the entropy generation effect of nitrogen and reduces overall system exergy loss compared to single circulation. The dual circulation is kept to circulate for the full time, so that the low temperature state of the main heat exchanger can be maintained, and the structural damage possibly caused by temperature stress can be improved.
7. The cold capacity of the cold storage medium in the cold storage section is stored in the cold storage packed bed, which can use solid-phase cold storage medium or phase-change cold storage material. The two packed beds are started, operated and stopped at the same time, and the energy storage section and the energy release section are continuously circulated, so that the low temperature state of the main heat exchanger can be continuously maintained, and the structural damage due to temperature stress caused by the temperature rebound of the main heat exchanger can be prevented.
8. Since the cold energy of LNG is utilized gradiently, the interstage inlet of the compressor takes away the heat through LNG, so the heat at the interstage inlet of the compressor is no longer recovered and utilized. In addition, the heat source provided by the LNG receiving station is employed. The energy release section uses seawater provided by the LNG receiving station as a heat source or hot water provided by the gas power plant supporting the LNG receiving station as a heat source to perform interstage heating on the inlet of the expander group to improve system efficiency.
9. The isentropic efficiency of the compressor group and the expander group should not be less than 85%, and the air compressor group and the expander group evenly distribute the inlet and outlet pressures of each machine according to the pressure ratio. The air compressor group and the expander group are respectively composed of multi-stage compressors and multi-stage expanders, and heat can be transferred through the interstage pipelines.

The invention significantly improves the system efficiency of the liquid air energy storage and improves the utilization rate of the LNG cold energy by utilizing the LNG cold energy of the LNG receiving station. The exergy efficiency of the liquid air energy storage system is improved through the gradient utilization of the cold energy, and the configuration of the heat storage system is omitted, reducing the system cost of the liquid air energy storage. By employing the nitrogen cold storage dual circulation, the low temperature state of the main heat exchanger is maintained, and the reliability of the intermittent operation of the heat exchanger under low temperature state is improved.

The invention is excellent in use and has high value for use and popularization.

### BRIEF DESCRIPTION OF THE DRAWINGS

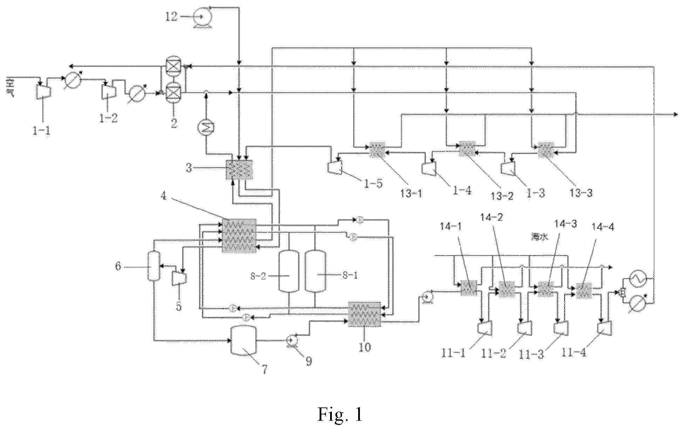

Fig.1 is a system flowchart of the present invention.

In the drawing:
1-1, first compressor; 1-2, second compressor; 1-3, third compressor; 1-4, fourth compressor;
1-5, fifth compressor; 2, absorption device; 3, first main heat exchanger; 4, second main heat exchanger;
5, hydraulic turbine; 6, air separator; 7, liquid air storage tank; 8-1, first cold storage tank;
8-2, second cold storage tank; 9, liquid air pump; 10, third main heat exchanger; 11-1, first expander;
11-2, second expander; 11-3, third expander; 11-4, fourth expander; 12, LNG receiving station;
13-1, first interstage heat exchanger; 13-2, second interstage heat exchanger; 13-3, third interstage heat exchanger;
14-1, first interstage heater; 14-2, second interstage heater; 14-3, third interstage heater;
14-4, fourth interstage heater.

### DETAILED DESCRIPTION

In order to make the purpose, technical solution and advantages of the present invention more clear, the technical solution of the present invention will be clearly and completely described below in conjunction with the accompanying drawings. Obviously, the described embodiments are part of the embodiments of the present invention, not all of the embodiments. Based on the embodiments of the present invention, all of other embodiments obtained by those skilled in the art without making creative work are within the protection scope of the present invention.

The present invention provides a liquid air energy storage system based on LNG cold energy utilization. The present invention includes an LNG receiving station, a compression section, an energy storage section, a cold storage section and an energy release section. The compression section includes a compressor group, the energy storage section includes a main heat exchanger group, a hydraulic turbine, an air separator and a liquid air storage tank connected in sequence. The main heat exchanger group is also connected with the compressor group, and the LNG receiving station, the main heat exchanger group and the compressor group are connected in sequence. The energy release section includes a liquid air pump, a first main heat exchanger and an expansion compressor group connected in sequence. The liquid air pump is also connected with the liquid air storage tank. The cold storage section includes a cold storage tank and a circulation system, and the cold storage tank is connected with the main heat exchanger group and the first main heat exchanger through the circulation system.

The invention discloses a liquid air energy storage system based on LNG cold energy utilization, which is suitable for liquid air energy storage, including but not limited to liquid air energy storage systems around LNG receiving stations. By utilizing LNG cold energy, the utilization rate of LNG cold energy at the receiving station is improved. By using the liquid air energy storage system to adjust the peak-to-valley difference of the nearby power system, the balance of the power system is promoted. At the same time, the efficiency of liquid air energy storage can be improved by further combining the residual heat resources of the gas power plants near the LNG receiving station and the cold energy resources of the LNG receiving station itself.

Referring to Fig. 1 , a liquid air energy storage system based on LNG cold energy utilization includes a compression section, an energy storage section, a cold storage section, and an energy release section, and the system is connected with an LNG receiving station 12;

The liquid air energy storage system based on LNG cold energy utilization can employ an open cycle or a closed cycle as a whole. In the large energy density energy storage scenario, the closed cycle can be adopted. The air directly enters the inlet of the compression section after releasing energy in the energy release section, which can reduce the energy consumption of the air compressor for purification and improve the system efficiency. In the high-power intermittent operation energy storage scenario, the open cycle can be adopted. The air is directly discharged into the atmosphere after releasing energy in the energy release section, which can reduce the number of energy storage facilities, such as liquid air energy storage, and reduce system cost.

Referring to Fig. 1, the compression section includes an air compressor group, an adsorption device 2 and a first main heat exchanger 3, and the air compressor group includes a first compressor 1-1, a second compressor 1-2, a third compressor 1-3, a fourth compressor 1-4 and a fifth compressor 1-5. The first compressor 1-1, the second compressor 1-2, the adsorption device 2, the third compressor 1-3, the fourth compressor 1-4, the fifth compressor 1-5 and the first main heat exchanger 3 are connected in sequence.

The compression section further includes an interstage heat exchanger group, which includes a first interstage heat exchanger 13-1, a second interstage heat exchanger 13-2 and a third interstage heat exchanger 13-3. The first interstage heat exchanger 13-1 is provided at the air inlet of the fifth compressor 1-5, the second interstage heat exchanger 13-2 is provided at the air inlet of the fourth compressor 1-4, and the third interstage heat exchanger 13-3 is provided at the air inlet of the third compressor 1-3. The LNG receiving station 12 is connected with the first main heat exchanger 3, the first interstage heat exchanger 13-1, the second interstage heat exchanger 13-2 and the third interstage heat exchanger 13-3, respectively. The first interstage heat exchanger 13-1, the second interstage heat exchanger 13-2 and the third interstage heat exchanger 13-3 are connected in sequence, and the third interstage heat exchanger 13-3 is also connected with the air separator 6 through the first main heat exchanger 3 and the second main heat exchanger 4.

The LNG cold energy firstly exchanges heat with the pressurized air through the first main heat exchanger 3, and then passes through the interstage pipelines of the compressors 1-5, 1-4, and 1-3 stage by stage for interstage cooling of the compressors.

LNG first releases high-grade cold capacity via the first main heat exchanger 3, and then the compressor group is interstage-cooled to release low-grade cold capacity, thereby improving the utilization rate of LNG cold energy and reducing the exergy loss of overall energy.

There are two ways to utilize LNG cold energy. Firstly, it directly participates in the interstage-cooling of the compressor group, reduces the inlet temperature of the compressor group and the power of the compressor at the same time, thereby improving the system efficiency. Secondly, it directly participates in the air cooling of the first main heat exchanger 3, and utilizes the LNG cold energy to directly participate in the air liquefaction, thereby improving the liquefaction rate of air. The low-temperature LNG preferentially participates in the air cooling of the first main heat exchanger 3, and then participates in the interstage-cooling of the compressor group. The high-grade LNG cold energy is first used, and then the low-grade LNG cold energy is used, which complies with the principle of LNG gradient utilization, and at the same time, the cold energy contained in LNG is fully utilized, thereby improving the utilization rate of LNG and the exergy efficiency of the overall system.

Since the air is to be liquefied and the liquid temperature is relatively low, it is necessary to remove carbon dioxide and water therein to prevent solid dielectric from being mixed in the liquefaction process and damaging the devices and equipment in the system. The compression section is provided with an adsorption device 2 to remove carbon dioxide and water, and the adsorption device 2 can be regenerated by the air discharged in the expansion section.

Continuing referring to Fig. 1, the energy storage section includes a second main heat exchanger 4, a hydraulic turbine 5, an air separator 6 and a liquid air storage tank 7. The first main heat exchanger 3, the second main heat exchanger 4, the hydraulic turbine 5, the air separator 6 and the liquid air storage tank 7 are connected in sequence. The gas phase outlet of the air separator 6, the second main heat exchanger 4, the first main heat exchanger 3, and the third interstage heat exchanger are connected in sequence. Wherein, the hydraulic turbine 5 is a low-temperature hydraulic turbine or a J-T throttle valve. The use of the low-temperature hydraulic turbine 5 can simultaneously increase the liquefaction rate, recover electrical energy and kinetic energy, and improve the efficiency of the overall system.

In the energy storage section, the electric power in the power grid is input to the compressor. The air is pressurized by compressors 1-1 and 1-2, and then purified by the adsorption device 2 to remove carbon dioxide and water. After being pressurized by compressors 1-3, 1-4, and 1-5, it enters the first main heat exchanger 3 for cooling, and then is further cooled by the second main heat exchanger 4. Thereafter, the air undergoes air liquefaction by the hydraulic turbine 5, and then undergoes exhaust gas separation by the air separator 6. The liquid air enters the liquid air storage tank 7. After the air separator 6 performs gas-liquid separation, the gas phase further releases cold capacity through the second main heat exchanger 4 and the first main heat exchanger 3, and then returns to the adsorption device 2 and re-enters the air cycle thereafter.

Continuing referring to Fig. 1, the cold storage section includes a cold storage tank 8 and a circulation system. The cold storage tank 8 is connected with the second main heat exchanger 4 and the third main heat exchanger 10 through the circulation system, respectively.

Continuing referring to Fig. 1, the circulation system includes a first circulation pipeline and a second circulation pipeline for connecting the cold storage tank, the second main heat exchanger 4 and the third main heat exchanger 10, and fans are provided on the first circulation pipeline and the second circulation pipeline. The cold storage tank includes two, one of which is the first cold storage tank 8-1 and the other of which is the second cold storage tank 8-1. The first cold storage tank 8-1 forms a circulation with the second main heat exchanger 4 and the third main heat exchanger 10 through the first circulation pipeline, and the second cold storage tank 8-2 forms a circulation with the second main heat exchanger 4 and the third main heat exchanger 10 through the second circulation pipeline. In the energy release stage, the cold capacity of the liquid air is taken away by the first cold storage tank 8-1 and the second cold storage tank 8-2 in the third main heat exchanger 10 and the cold capacity is stored in the cold storage tank 8. In the energy storage stage, the cold capacity in the first cold storage tank 8-1 and the second cold storage tank 8-2 is taken away by the second main heat exchanger 4 to promote the reduction of the air temperature in the second main heat exchanger 4.

Continuing to refer to Fig. 1 , the first main heat exchanger 3 , the second main heat exchanger 4 and the third main heat exchanger 10 can be plate-fin heat exchangers or coiled pipe heat exchangers. The plate-fin heat exchanger is more suitable for a large-capacity liquid air energy storage system.

The cold capacity of the cold storage medium in the cold storage stage is stored in the cold storage packed bed, which is provided in the cold storage tank 8. The packed bed can use solid-phase cold storage medium or phase-change cold storage material. The two packed beds are started, operated and stopped at the same time, and the energy storage section and the energy release section are continuously circulated, so that the low temperature state of the main heat exchanger can be continuously maintained, and the structural damage due to temperature stress caused by the temperature rebound of the main heat exchanger can be prevented.

The cold capacity of liquid air is stored by the cold storage medium in the energy release stage, and the cold capacity is released in the energy storage stage, thereby increasing the liquefaction rate of air and reducing the energy consumption in the energy storage stage. The cold storage section can employ propane cold storage medium or nitrogen cold storage medium for cold storage cycle. LNG receiving stations with intermediate medium vaporizers can use their own propane system for cold storage. If the LNG receiving station itself does not contain a propane system, nitrogen can be used for cold storage cycle.

The cold storage section employs high and low temperature dual circulation to cool simultaneously and the temperature levels of the circulation are distinguished by changing the nitrogen circulation volume. Taking the nitrogen cold storage cycle as an example, a small flow of nitrogen circulates at a low temperature level, and the temperature drops to about -180°C after heat exchange with liquid air, and then the cold capacity is transferred to the air before liquefaction and the temperature rises to about -170°C. A large flow of nitrogen circulates at a high temperature level, and the temperature drops to about -180°C after heat exchange with liquid air, and then the cold capacity is transferred to the air before liquefaction and the temperature rises to about -154°C.

Continuing referring to Fig. 1, the energy release section includes a liquid air pump 9, a third main heat exchanger 10 and an expansion compressor group, the expansion compressor group includes a first expander 1-1, a second expander 11-2, a third expander 11-3 and a fourth expander 11-4, and the liquid air storage tank 7, the liquid air pump 9, the third main heat exchanger 10, the first expander 1-1, the second expander 11-2, the third expander 11-3 and the fourth expander 11-4 are connected in sequence.

The energy release section further includes an interstage heater group, which includes a first interstage heater 14-1, a second interstage heater 14-2, a third interstage heater 14-3 and a fourth interstage heater 14-4. The first interstage heater 14-1 is provided at the air inlet end of the first expander group 1-1, the second interstage heater 14-2 is provided at the air inlet end of the second expander 11-2, the third interstage heater 14-3 is provided at the air inlet end of the third expander 11-3, and with the fourth interstage heater 14-4 is provided at the air inlet end of the fourth expander 11-4.

In the energy release stage, the liquid air in the liquid air storage tank 7 is pressurized by the liquid air pump 9 and is output, and is reheated into gaseous air by the third main heat exchanger 10, and then works via the first expander 11-1, the second expander 11-2, the third expander 11-3 and the fourth expander 11-4 to input electric power into the power grid.

The seawater is subjected to inter-stage heating of the expansion compressor group by passing through the first expander 11-1, the second expander 11-2, the third expander 11-3 and the fourth expander 11-4 and the first interstage heater 14-1, the second interstage heater 14-2, the third interstage heater 14-3 and the fourth interstage heater 14-4 stage by stage.

Since the LNG cold energy is utilized gradiently, the interstage inlet of the compressor group takes away the heat via LNG, and thus the heat at the interstage inlet of the compressor group is no longer recovered and utilized. In addition, the heat source provided by the LNG receiving station is employed. The energy release section uses seawater provided by the LNG receiving station as a heat source or hot water provided by the gas power plant supporting the LNG receiving station as a heat source to perform interstage heating on the inlet of the expansion compressor group so as to improve system efficiency.

By employing LNG cold energy for interstage cooling of the compressor group and employing seawater residual heat for interstage heating of the expansion compressor, it is not necessary to recover the interstage heat of the compressor group for interstage heating of the expansion compressor, thereby the efficiency of the overall system is improved and the investment of the overall system is reduced.

The isentropic efficiency of the compressor group and the expansion compressor group should not be less than 85%, and the compressor group and the expansion compressor group evenly distribute the inlet and outlet pressures of each machine according to the pressure ratio. The compressor group and the expansion compressor group are respectively composed of multi-stage compressors and multi-stage expanders, and heat can be transferred through the interstage pipelines.

Finally, it should be noted that the above embodiments are only used to illustrate the technical solutions of the present invention, rather than to limit it. Although the present invention has been described in detail with reference to the aforementioned embodiments, those skilled in the art should understand that they can still modify the technical solutions recorded in the aforementioned embodiments, or make equivalent replacements for some of the technical features therein. However, these modifications or replacements do not make the essence of the corresponding technical solutions deviate from the spirit and scope of the technical solutions of the embodiments of the present invention.

## Claims

1. A liquid air energy storage system based on LNG cold energy utilization, the system being connected with an LNG receiving station, **characterized in that**, comprising a compression section, an energy storage section, a cold storage section and an energy release section;
the compression section comprises a compressor group, a first main heat exchanger and an interstage heat exchanger group, the LNG receiving station is connected with the interstage heat exchanger group through the first main heat exchanger, the compressor group is connected with the first main heat exchanger, the LNG cold energy of the LNG receiving station can participate in air cooling of the first main heat exchanger, the LNG cold energy is utilized to directly participate in the air liquefaction, and liquefaction rate of air is improved;
the compressor group comprises a plurality of compressors connected in series, the interstage heat exchanger group comprises a plurality of interstage heat exchangers, the interstage heat exchangers are provided at the air inlets of the compressors to realize interstage cooling of the compressor group, and the LNG cold energy of the LNG receiving station can participate in the interstage cooling of the compressor group, so as to realize the reduction of the inlet temperature of the compressor group while reducing the power of the compressors, and the system efficiency is improved;
the energy storage section comprises a second main heat exchanger, a hydraulic turbine, an air separator and a liquid air storage tank connected in sequence, and the second main heat exchanger is connected with the compressor group through the first main heat exchanger, the gas phase outlet of the air separator is further connected with the compressor group through the second main heat exchanger, the first main heat exchanger, and the interstage heat exchanger group in sequence;
the energy release section comprises a liquid air pump, a third main heat exchanger and an expansion compressor group connected in sequence, the liquid air pump is also connected with the liquid air storage tank, and a heat source of the energy release section is seawater provided by the LNG receiving station or hot water provided by a gas power plant supporting the LNG receiving station;
the cold storage section comprises a cold storage tank and a circulation system, the cold storage tank is connected with the second main heat exchanger and the third main heat exchanger through the circulation system, the cold storage section stores the cold capacity of the liquid air of the energy release section by means of a cold storage medium, and releases the cold capacity in the energy storage section so as to increase the liquefaction rate of air, and to reduce the energy consumption of the energy storage stage;
the cold storage tank comprises a first cold storage tank and a second cold storage tank, the circulation system comprises a first circulation pipeline and a second circulation pipeline, the second main heat exchanger, the first cold storage tank and the third main heat exchanger are connected via the first circulation pipeline, the second main heat exchanger, the second cold storage tank and the third main heat exchanger are connected via the second circulation pipeline, the first cold storage tank and the second cold storage tank are respectively provided with a cold storage packed bed, the cold storage packed beds can use solid-phase cold storage medium or phase-change cold storage material, and the two cold storage packed beds are started, operated and stopped at the same time so as to achieve the continuous circulation between the energy storage section and the energy release section, which is capable of guaranteeing a low temperature state of the first main heat exchanger, the second main heat exchanger and the third main heat exchanger so as to prevent the structural damage due to temperature stress caused by the temperature rebound of the first main heat exchanger, the second main heat exchanger and the third main heat exchanger.

2. The liquid air energy storage system based on LNG cold energy utilization according to claim 1, **characterized in that**, the compressor group comprises a first compressor, a second compressor, a third compressor, a fourth compressor, and a fifth compressor connected in sequence, the first compressor, the second compressor, the third compressor, the fourth compressor, and the fifth compressor achieve interstage cooling, release low-grade cold capacity, and improve utilization rate of LNG cold energy, and the fifth compressor is connected with the first main heat exchanger and the first main heat exchanger is connected with the third compressor.

3. The liquid air energy storage system based on LNG cold energy utilization according to claim 2, **characterized in that**, the compression section further comprises an adsorption device, the adsorption device is provided between the second compressor and the third compressor, and is provided at an air outlet end of the expansion compressor group, the adsorption device is used to remove carbon dioxide and water, and the adsorption device can regenerate by means of the air discharged from the expansion compressor group.

4. The liquid air energy storage system based on LNG cold energy utilization according to claim 2, **characterized in that**, the interstage heat exchanger group comprises a first interstage heat exchanger, a second interstage heat exchanger and a third interstage heat exchanger, the first interstage heat exchanger is provided at an air inlet of the fifth compressor, the second interstage heat exchanger is provided at an air inlet of the fourth compressor, the third interstage heat exchanger is provided at an air inlet of the third compressor, the LNG receiving station is respectively connected with the first main heat exchanger, the first interstage heat exchanger, the second interstage heat exchanger and the third interstage heat exchanger, the first interstage heat exchanger, the second interstage heat exchanger and the third interstage heat exchanger are sequentially connected therebetween, the third interstage heat exchanger is also connected with a gas phase outlet of the air separator through the first main heat exchanger and the second main heat exchanger.

5. The liquid air energy storage system based on LNG cold energy utilization according to any one of claims 1 to 4, **characterized in that**, the energy release section further comprises an interstage heater group, which comprises a plurality of interstage heaters, the expansion compressor group comprises a plurality of expansion compressors in series, and the interstage heaters are provided at air inlet ends of the expansion compressors to achieve interstage heating for the heat source.

6. The liquid air energy storage system based on LNG cold energy utilization according to claim 5, **characterized in that**, the expansion compressor group comprises a first expander, a second expander, a third expander and a fourth expander connected in sequence, the interstage heater group comprises a first interstage heater, a second interstage heater, a third interstage heater and a fourth interstage heater, the first expander is also connected with the third main heat exchanger, the air inlet end of the first expander group is provided with the first interstage heater, the air inlet end of the second expander is provided with the second interstage heater, the air inlet end of the third expander is provided with the third interstage heater, and the air inlet end of the fourth expander is provided with the fourth interstage heater, so as to achieve the interstage heating for the heat source.

7. The liquid air energy storage system based on LNG cold energy utilization according to claim 5, **characterized in that**, the cold storage medium of the cold storage section is a propane cold storage medium or a nitrogen cold storage medium, which can satisfy the work of an LNG receiving station with an intermediate medium gasifier or an LNG receiving station without the intermediate medium gasifier.

8. The liquid air energy storage system based on LNG cold energy utilization according to any one of claims 1 to 4, **characterized in that**, the first main heat exchanger, the second main heat exchanger and the third main heat exchanger are plate-fin heat exchangers or coiled pipe heat exchangers.

9. The liquid air energy storage system based on LNG cold energy utilization according to any one of claims 1 to 4, **characterized in that** the hydraulic turbine is a low-temperature hydraulic turbine or a J-T throttle valve.
